Europäisches Patentamt

(19) European Patent Office

Office européen des brevets

(11) Veröffentlichungsnummer: **0 129 685**
**B1**

(12) **EUROPÄISCHE PATENTSCHRIFT**

(45) Veröffentlichungstag der Patentschrift: 22.08.90

(51) Int. Cl.⁵: **F 16 D 35/00, F 01 P 7/04**

(21) Anmeldenummer: **84105279.8**

(22) Anmeldetag: **10.05.84**

(60) Teilanmeldung 90100354.1 eingereicht am 10/05/84.

(54) **Flüssigkeitsreibungskupplung.**

(30) Priorität: 24.06.83 DE 3322779

(43) Veröffentlichungstag der Anmeldung:
02.01.85 Patentblatt 85/01

(45) Bekanntmachung des Hinweises auf die Patenterteilung:
22.08.90 Patentblatt 90/34

(84) Benannte Vertragsstaaten:
BE DE FR GB IT SE

(56) Entgegenhaltungen:
DE-B-2 814 608
FR-A- 528 502
FR-A- 753 956
FR-A-1 553 298
GB-A-1 128 597
US-A-4 058 027

(73) Patentinhaber: **Süddeutsche Kühlerfabrik Julius Fr. Behr GmbH & Co. KG**
**Mauserstrasse 3**
**D-7000 Stuttgart 30 (DE)**

(72) Erfinder: **Martin, Hans, Dipl.-Ing.**
**Wartbergstrasse 27**
**D-7000 Stuttgart 1 (DE)**

(74) Vertreter: **Heumann, Christian**
**Süddeutsche Kühlerfabrik Julius Fr. Behr GmbH & Co. KG Patentabteilung Mauserstrasse 3**
**Postfach 30 09 20**
**D-7000 Stuttgart 30 (DE)**

Courier Press, Leamington Spa, England.

## Beschreibung

Die Erfindung geht aus von einer Flüssigkeitsreibungskupplung gemäß dem Oberbegriff des Patentanspruches 1, wie sie durch die DE-B-28 14 608 bekannt wurde.

Bei derartigen Flüssigkeitsreibungskupplungen wird die Leistung über die Scherkräfte eines viskosen Mediums vom Antrieb auf den Abtrieb übertragen. Im Arbeitsbereich dieser Kupplung liegt dabei das Verhältnis von Abtriebs- zu Antriebsdrehzahl immer unter dem Wert 1, da zwischen Antriebsscheibe und abtreibendem Gehäuse ständig ein bestimmter Schlupf auftritt. Bisher war es nicht möglich, mit diesem Kupplungsprinzip eine Erhöhung der Abtriebsdrehzahl zu erreichen.

Durch die FR-A-528.502 wurde zwar ein aus sich überdeckenden Scheiben bestehendes Planetengetriebe bekannt, bei welchem sich zwischen den einzelnen Scheiben Öl befindet. Diese Scheiben, die innerhalb des Planetengetriebes als Innensonne, Außensonne und Planetenräder auf einem Planetenträger fungieren, bilden jedoch keine definierten Spalte miteinander, sondern sind axial gegeneinander verschiebbar, um die einzelnen Scheibenpaarungen miteinander in Eingriff oder außer Eingriff zu bringen. Um die Scheibenpaarungen zwecks Kraftübertragung miteinander in Eingriff zu bringen, muß eine Axialkraft aufgebracht werden, die auch während des Eingriffes als Anpreßkraft aufrechterhalten werden muß. Dadurch wird der vorher zwischen den Scheibenpaarungen vorhandene Spalt praktisch auf Null bzw. auf die Dicke des schmierenden Ölfilmes reduziert. Insofern handelt es sich bei dieser Art von Kraftübertragung um Naß oder Mischreibung. Diese Art von Reibung bedarf also einerseits einer Anpreßkraft und andererseits ist sie mit Verschleiß verbunden.

Durch die FR-A-1.553.298 wurde eine Flüssigkeitsreibungskupplung bekannt, bei der die Arbeitsflächen durch stirnseitig angeordnete, ringförmige Stege und Nuten gebildet werden. Diese Flüssigkeitsreibungskupplung ist fliehkraft- bzw. drehzahlabhängig geregelt, d.h. bei einer bestimmten Drehzahl des Rotors wird ein Staukörper gegen eine Rückholfederkraft nach außen gedrückt, und das im Arbeitsraum befindliche Öl wird nach innen gefördert — dadurch regelt die Kupplung ab. Innerhalb des Rotors befindet sich kein abgeschlossener Vorratsraum, sondern lediglich eine ringförmige Aussparung, die mit dem vorderen Scherraum in Verbindung steht und somit nicht in der Lage ist, das gesamte Öl zurückzuhalten. Vor allem ist diese Kupplung nicht in der Lage, eine Übersetzung ins Schnelle zu ermöglichen.

Aufgabe der Erfindung ist es, ausgehend von einer Flüssigkeitsreibungskupplung gemäß dem Oberbegriff des Patentanspruches 1, eine Erhöhung der Abtriebsdrehzahl, d.h. eine Übersetzung von der Antriebsdrehzahl ins Schnelle, zu erreichen. Insbesondere ist es Aufgabe der Erfindung, daß die Erhöhung der Abtriebsdrehzahl bei niedrigen Antriebsdrehzahlen erreicht wird und daß die Abtriebsdrehzahl bei höheren Antriebsdrehzahlen wieder gesenkt werden kann. Die Lösung dieser Aufgabe ergibt sich aus den kennzeichnenden Merkmalen des Patentanspruches 1: danach wird das Prinzip eines Planetengetriebes kombiniert mit dem Prinzip der Flüssigkeitsreibungskupplung, wodurch eine Übersetzung ins Schnelle und auch eine Änderung der Übersetzung möglich wird. Die Kupplung kann also einerseits als Getriebe bzw. Wandler und andererseits als reine Schlupfkupplung arbeiten. Diese Doppelfunktion ist insbesondere für solche Kupplungen von großem Vorteil, die in Fahrzeugen zum Antrieb eines Lüfters zur Kühlung der Brennkraftmaschine eingebaut werden. Hier bewirkt eine erhöhte Lüfterdrehzahl bei niedriger Antriebsdrehzahl, d.h. bei niedriger Motordrehzahl, einen erhöhten Kühlluftstrom durch den Kühler der Brennkraftmaschine, was eine verbesserte Motorkühlung zur Folge hat. Da dieser Bereich mit niedriger Motordrehzahl auch maßgebend für die Dimensionierung der Kühlanlage bzw. des Wasser/Luft-Kühlers des Motors ist, kann durch eine Erhöhung der Lüfterdrehzahl in diesem Bereich der Kühler bezüglich seiner Wärmeaustauschfläche und damit auch bezüglich seiner Kosten reduziert werden. Bei Fahrzeugen mit Klimaanlage befindet sich vor dem Kühler ein Kondensator mit elektrischem Zusatzgebläse — letzteres kann durch die Anhebung der Lüfterdrehzahl entfallen, da der Lüfter hinter dem Kühler durch eine angepaßte Übersetzung ins Schnelle auch den Kühlluftbedarf für den Kondensator, d.h. die Klimaanlage, decken kann.

Gemäß Anspruch 1 besteht das Planetengetriebe aus drei Gliedern, also der einfachsten Form eines Planetengetriebes, wobei der Antrieb über den Steg und der Abtrieb über die Innensonne erfolgt; das dritte Glied dieses Planetengetriebes ist das Kupplungsgehäuse, das umläuft oder abgebremst werden kann. In letzterem Falle stellt sich etwa das für ein entsprechendes Planetengetriebe bekannte Übersetzungsverhältnis zwischen Antrieb und Abtrieb ein. Läuft dagegen das Kupplungsgehäuse, das getriebekinematisch als Außensonne ausgebildet ist, mit um, so wird sich zwischen Abtrieb und Antrieb ein Drehzahlverhältnis einstellen, das < 1 ist.

Gemäß Anspruch 1 ist das Kupplungsgehäuse—in an sich bekannter Weise — in eine Vorrats- und eine Arbeitskammer durch eine Trennwand unterteilt, wobei der Zufluß von Scherflüssigkeit in die Arbeitskammer über ein Ventil gesteuert wird; die miteinander im Eingriff befindlichen Getriebeglieder sind in der Arbeitskammer angeordnet. Je nach Füllungsgrad der Arbeitskammer bestimmen sich die zwischen den Getriebegliedern übertragenen Umfangskräfte und damit die Abtriebsdrehzahl: befindet sich beispielsweise infolge geschlossenem Ventil keine Scherflüssigkeit in der Arbeitskammer, so können auch keine Umfangskräfte zwischen den Getriebegliedern übertragen werden, so daß die Abtriebsdrehzahl gleich null bzw. einer niedrigen Leerlaufdrehzahl ist. Bei sich öffnendem Ventil strömt Scherflüssigkeit in die Arbeitskammer, die Spalte zwischen den Getriebegliedern werden gefüllt, und die Kupplung läuft bezüglich ihrer Abtriebsdrehzahl hoch. Das Prinzip der Proportionalregelung für die Abtriebsdrehzahl bleibt somit erhalten.

Gemäß Anspruch 1 sind die Spalte als Axialspalte ausgebildet, wobei eine beliebige Anzahl von Axialspalten möglich ist. Durch diese Vervielfachung der Axialspalte zwischen den in Eingriff befindlichen Getriebegliedern können die übertragbaren Umfangskräfte proportional vervielfacht werden.

Gemäß Anspruch 1 ist der Abtrieb der Kupplung als Welle aus dem Kupplungsgehäuse geführt und trägt den Lüfter, der die Kühlluft durch den Kühler fördert und somit die Kühltemperatur bestimmt. Durch diese konstruktive Ausführung ist es möglich, eine derartige Flüssigkeitsreibungskupplung mit eingebauter Übersetzung ins Schnelle in bisher bekannter Weise an den Motor von Kraftfahrzeugen anzubauen, ohne daß es motoroder fahrzeugseitig konstrukiver Änderungen bedürfte.

Weitere vorteilhafte Ausgestaltungen der Erfindung gehen aus den Unteransprüchen hervor:

Gemäß Anspruch 2 ergibt sich eine einfache konstruktive Ausbildung des dreigliedrigen Planetengetriebes, nach der die Planetenräder als Doppelscheiben mit einem Axialspalt ausgebildet sind, in den von innen die Abtriebsscheibe (Innensonne) und von außen das Kupplungsgehäuse (Außensonne) eingreifen. Zwischen den Planetenrädern der Innensonne und der Außensonne ist also eine Schlupfverbindung nach dem Prinzip der Flüssigkeitsreibungskupplung hergestellt, die gewährleistet, daß Umfangskräfte in ähnlicher Weise wie bei einem Planetengetriebe herkömmlicher Art zwischen den Getriebegliedern übertragen werden. Die sich einstellenden Übersetzungsverhältnisse entsprechen denen der herkömmlichen Umlaufgetriebe.

Gemäß Anspruch 3 ist eine weitere Vorratskammer im umlaufenden Primärteil, also im Steg des Umlaufgetriebes, vorgesehen. Durch diese mit einem fliehkraftbetätigten Ventil ausgestattete Vorratskammer kann die in der Arbeitskammer befindliche Scherflüssigkeit bei hohen Antriebsdrehzahlen in die primärseitige Vorratskammer abgepumpt werden, so daß geringere Umfangskräfte in der Arbeitskammer übertragen werden und die Abtriebsdrehzahl sinkt. Mit der primärseitigen Vorratskammer ist also eine zweite Führungsgröße, die Antriebsdrehzahl, für die Steuerung der Abtriebsdrehzahl vorgesehen.

Gemäß Anspruch 4 erfolgt die Steuerung zwischen tertiärseitiger Arbeits- und Vorratskammer temperaturabhängig, d.h. in Abhängigkeit von der Kühlluftoder Kühlmitteltemperatur. Dadurch wird die Abtriebsdrehzahl bzw. die Lüfterdrehzahl etwa proportional zur Temperatur gesteuert.

Gemäß Anspruch 5 erfolgt diese Steuerung über ein Bimetall, d.h. in Abhängigkeit von der Temperatur der Kühlluft, die auf die Kupplungsfrontseite trifft.

Ein Ausführungsbeispiel der Erfindung ist in der Zeichnung dargestellt und wird im folgenden näher beschrieben.

Es zeigen

Figur 1 ein bekanntes Planetengetriebe mit Zahnradeingriff,

Figur 2 die erfindungsgemäße Flüssigkeitsreibungskupplung mit Planetenübersetzung und

Figur 3 eine Teilansicht der Kupplung gemäß Figur 2 in Richtung der Kupplungsachse (Richtung X).

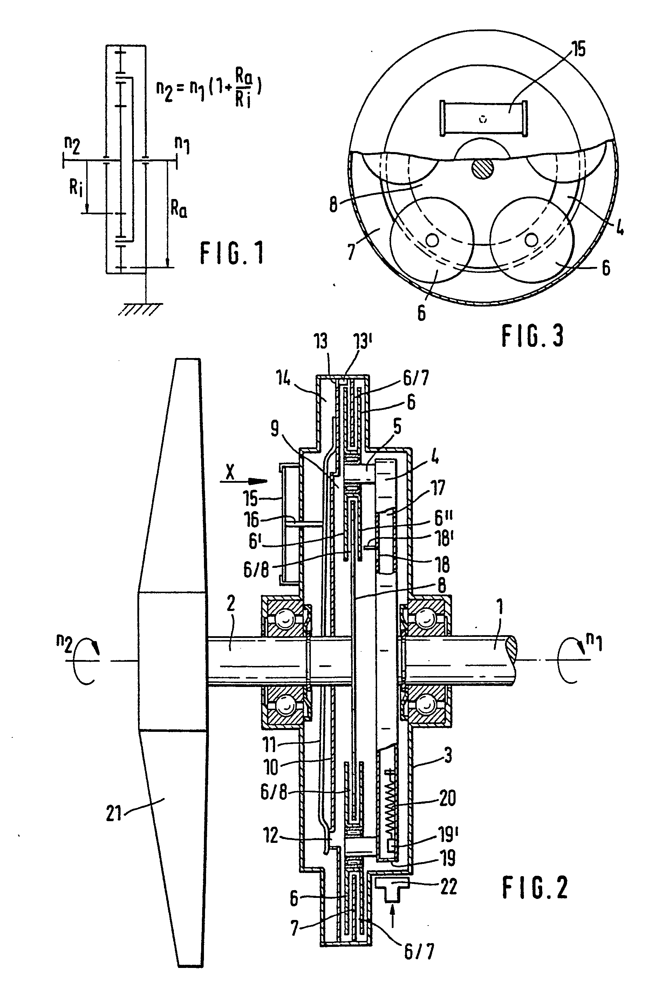

Figur 1 zeigt ein bekanntes Planeten- oder Umlaufgetriebe in schematischer Darstellung, wobei über den Steg mit der Drehzahl $n_1$ angetrieben und über die Innensonne mit der Drehzahl $n_2$ abgetrieben wird, während die als Gehäuse ausgebildete Außensonne festgehalten wird. Für diesen Fall ergibt sich für die Abtriebsdrehzahl folgender Ausdruck:

$$n_2 = n_1 \times (1 + \frac{R_a}{R_i}) \; *$$

Bei den bekannten Planetengetrieben wird die Leistung zwischen den einzelnen Getriebegliedern durch Zahnradeingriff schlupffrei übertragen.

Figur 2 zeigt die erfindungsgemäße Flüssigkeitsreibungskupplung mit einer Planetenübersetzung — ähnlich der in Figur 1 dargestellten mit dem Unterschied, daß hier die Leistung zwischen An- und Abtrieb über eine Scherflüssigkeit mit Schlupf übertragen wird. Die Flüssigkeitsreibungskupplung wird über die Antriebswelle 1 angetrieben und über die Abtriebswelle 2 abgetrieben, wobei auf der Antriebswelle 1 und auf der Abtriebswelle 2 ein Kupplungsgehäuse 3 drehbar gelagert ist, das zur Erzielung eindeutiger Übersetzungsverhältnisse durch eine Bremse 22 festgehalten werden kann. Die Antriebswelle 1 ist im Sinne eines Planetengetriebes als Stegwelle ausgebildet und trägt die Antriebsscheibe 4, die auf ihrem Umfang verteilt, drehbar auf Zapfen 5 gelagert, mehrere Planetenräder 6 trägt. Letztere sind als sogenannte Doppelscheiben ausgebildet, wobei zwei planparallel zueinander angeordnete Scheiben 6' und 6'' zwischen sich einen Axialspalt bilden. In diesen Axialspalt der Planetenräder 6 ragt einerseits von außen die mit dem Kupplungsgehäuse 3 fest verbundene Ringscheibe 7 und andererseits die fest mit der Abtriebswelle 2 verbundene Abtriebsscheibe 8. Ringscheibe 7 und Abtriebsscheibe 8 sind in der Mitte des Axialspaltes der Planetenräder 6 angeordnet, so daß sich zwischen Ringscheibe 7 und Planetenrad 6 die Axialspalte 6/7 und zwischen Abtriebsscheibe 8 und Planetenrad 6 die Axialspalte 6/8 ergeben, die mit Scherflüssigkeit, zum Beispiel handelsüblichem Silikonöl, füllbar bzw. benetzbar sind. Die Planetenräder 6 und die mit ihnen in Eingriff befindliche Abtriebsscheibe 8 und Ringscheibe 7 sind in einer Arbeitskammer 9 angeordnet, die

* (Vgl. Wolf, Die Grundgesetze der Umlaufgetriebe, Vieweg-Verlag 1958) durch eine Trennwand 10 im Kupplungsgehäuse 3 abgeteilt wird.

Diese Trennwand 10 weist einerseits eine Ventillöffnung 12 auf, die über einen federnd auf der Trennwand 10 gelagerten Ventilhebel 11 verschlossen und freigegeben werden kann. Andererseits ist in der Trennwand 10 eine Rücklaufbohrung 13 mit einem dieser zugeordneten Staukörper 13' vorgesehen. Auf der der Arbeitskammer 9 abgewandten Seite der Trennwand 10 befindet sich eine Vorratskammer 14, die somit über die Ventilöffnung 12 und die Rücklaufbohrung 13 mit der Arbeitskammer 9 in Verbindung steht. Der Ventilhebel 11 ist über ein temperaturwegempffindliches Element, ein Bimetall 15, das auf der Aussenseite des Kupplungsgehäuses 3 angeordnet ist, über einen Schaltstift 16 steuerbar, wobei der Ventilhebel 11 selbst die Rückstellfeder bildet.

Die Antriebsscheibe 4 ist als Hohlscheibe ausgebildet, d.h. in ihr befindet sich eine Vorratskammer 17, die über eine Zulaufbohrung 18 und einen dieser zugeordneten Staukörper 18' mit der Arbeitskammer 9 in Verbindung steht. Ferner weist die Vorratskammer 17 eine Ablauföffnung 19 auf, die durch ein fliehkraftgesteuertes Ventil 19' verschlossen und durch eine Rückstellfeder 20 wieder geöffnet werden kann.

Auf der Abtriebswelle 2 ist ein Lüfter 21 befestigt, der zur Kühlluftförderung hinter dem Wasserkühler einer wassergekühlten Brennkraftmaschine angeordnet ist. Die aus dem — nicht dargestellten — Kühler austretende (erwärmte) Luft beaufschlagt somit das auf der Frontseite der Kupplung befindliche Bimetall 15.

Die gesamte Kupplung kann entweder über die Antriebswelle 1 gegenüber der — nicht dargestellten — Brennkraftmaschine gelagert sein oder über das Kupplungsgehäuse 3 fest mit der Brennkraftmaschine verbunden sein, sofern das Kupplungsgehäuse ständig abgebremst sein soll.

Die Arbeitsweise dieser Flüssigkeitsreibungskupplung ist die folgende:

Bei dem in Figur 2 dargestellten Betriebszustand trifft relativ kalte Luft auf das Bimetall 15, so dass dieses eine gestreckte (gerade) Lage einnimmt und den Ventilhebel 11 über den Schaltstift 16 in Schliessposition hält. Die Kupplung wird mit relativ niedriger Drehzahl (unterer Drehzahlbereich) über die Antriebswelle 1 und die Antriebsscheibe 4 angetrieben. Infolge der Relativdrehzahl zwischen Kupplungsgehäuse 3 und Planetenrädern 6 wird das eventuell in der Arbeitskammer 9 befindliche Öl über den Staukörper 13' und die Rücklaufbohrung 13 in die Vorratskammer 14 gefördert, bis kein Öl mehr oder lediglich ein Minimum an Öl in der Arbeitskammer 9 verbleibt. Die Kupplung ist dann abgeschaltet bzw. läuft nur mit Leerlaufdrehzahl, da sich keine Scherflüssigkeit in den Spalten 6/7 und 6/8 befindet — somit kann hier auch kein Drehmoment übertragen werden.

Wird die Kupplung weiterhin im unteren Drehzahlbereich über die Antriebswelle 1 angetrieben und erwärmt sich gleichzeitig die auf das Bimetall 15 treffende Luft infolge ansteigender Kühlwassertemperatur, so wird sich das Bimetall 15 nach aussen wölben, so dass der Schaltstift 16 und mit ihm der Ventilhebel 11 dieser Durchbiegung des Bimetalls folgen kann:

Der Ventilhebel 11 hebt also von der Ventilöffnung 12 ab, und das in der Vorratskammer 14 befindliche Öl strömt in die Arbeitskammer 9 und benetzt somit die Spalte 6/7 und 6/8 — damit können zwischen den Planetenrädern 6 der Ringscheibe 7 und der Abtriebsscheibe 8 Umfangskräfte über die Scherflüssigkeit übertragen werden. Die einzelnen Kupplungsglieder, Antriebswelle 1, Planetenräder 6 und Abtriebswelle 2 verhalten sich hierbei ähnlich wie das in Figur 1 erläuterte Zahnrad-Planetengetriebe — allerdings mit dem Unterschied, daß bei der Flüssigkeitsreibungskupplung in den mit Scherflüssigkeit benetzten Spalten 6/7 und 6/8 ein gewisser Schlupf auftritt, wie dies durch die Flüssigkeitsreibungskupplungen bekannt ist. Entsprechend dem gewählten Durchmesserverhältnis von Ringscheibe 7 und Abtriebsscheibe 8 — analog den Radien $R_a$ und $R_i$ in Figur 1 — wird sich nun eine Übersetzung ins Schnelle von der Antriebswelle 1 auf die Abtriebswelle 2 einstellen, d.h. der Lüfter 21 wird mit einer höheren Drehzahl als die Antriebswelle 1 umlaufen, solange das Kupplungsgehäuse 3 festgehalten wird. Diese Anhebung der Lüfterdrehzahl ist im unteren Drehzahlbereich der Brennkraftmaschine aus Gründen besserer Kühlung erwünscht.

Liegt die Lufttemperatur weiterhin über der Zuschalttemperatur des Bimetalls 15 und wird jetzt die Kupplung über die Antriebswelle 1 mit einer relativ hohen Drehzahl (oberer Drehzahlbereich) angetrieben, so tritt das fliehkraftgesteuerte Ventil 19, 19' in Funktion:

Gegen die Kraft der Rückstellfeder 20 wandert das Ventil-Schließglied 19' radial nach außen und verschließt damit die Ablaufbohrung 19 der Vorratskammer 17. Gleichzeitig fördert der Staukörper 18 an der Antriebsscheibe 4 durch die Zulaufbohrung 18 ständig Öl in die Vorratskammer 17, indem der Staukörper 18' dieses Öl von der Außenseite der Scheibe 6'' des Planetenrades 6 abstreift. Der an der Antriebsscheibe 4 befestigte Staukörper 18 ist also dauernd mit dem ihm zugeordneten Planetenrad 6 in Eingriff und fördert das von dem Planetenrad 6 an der Außenseite mitgeführte Öl ständig in die Vorratskammer 17. Dadurch, daß die Vorratskammer 17 nun durch das Ventil 19 verschlossen ist, sammelt sich hier das Öl, d.h. es wird aus der Arbeitskammer 9 bzw. aus den Spalten 6/7 und 6/8 in die Vorratskammer 17 verlagert. Damit können zwischen Ringscheibe 7 und Planetenrädern 6 keine Umfangskräfte mehr übertragen werden, d.h. die Abtriebsdrehzahl sinkt auf Leerlaufdrehzahl ab.

Wird die Kupplung in einem mittleren Drehzahlbereich angetrieben, so wird das Kupplungsgehäuse 3 gelöst, so daß es umlaufen kann. Das Lösen des Kupplungsgehäuses 3, das bisher durch die Bremse 22 abgebremst war, kann durch eine geeignete Automatik in Abhängigkeit von der Antriebsdrehzahl, von der Kühlmitteltemperatur oder vom Bedarf der Klimaanlage erfolgen. Solange sich Scherflüssigkeit in der Arbeitskammer 9 bzw. in den Axialspalten 6/7 und 6/8 befindet, werden das Kupplungsgehäuse 3 und ebenso die Abtriebsscheibe 8 über die Umfangskräfte an den Planetenrädern 6 mitgenommen: es wird sich eine Abtriebsdrehzahl einstellen, die unter der Antriebsdrehzahl liegt, d.h. die Übersetzung ist herausgenommen, die Flüssigkeitsreibungskupplung arbeitet wieder als Kupplung, nicht mehr als Wandler.

Die Erfindung ist nicht auf das dargestellte und beschriebene Ausführungsbeispiel beschränkt: bei einer dreigliedrigen Ausführung des Planetengetriebes ist es beispielsweise auch möglich, den Steg festzuhalten bzw. abzubremsen, über das Kupplungsgehäuse, d.h. die Außensonne anzutreiben und über die Innensonne abzutreiben. In diesem Falle ergäbe sich ebenfalls eine Übersetzung ins Schnelle; das von der Antriebsdrehzahl abhängige Fliehkraftventil müßte dann an der antreibenden Außensonne angebracht sein. Eine solche Lösung kann bezüglich des Einbaues in Kraftfahrzeuge besondere Vorteile haben.

**Patentansprüche**

1. Flüssigkeitsreibungskupplung mit antreibendem Primärteil (1) und abtreibendem Sekundärteil (2), auf dem ein Lüfter (21) befestigt ist, wobei die Leistung zwischen Antrieb und Abtrieb über die Scherkräfte einer Scherflüssigkeit übertragen wird, die sich in der Kupplung befindet, dadurch gekennzeichnet, daß Primär- und Sekundärteil (1, 2) Glieder eines dreigliedrigen Planetengetriebes sind, wobei die miteinander in Eingriff befindlichen Glieder (6, 7, 8) Axialspalte (6/7, 6/8) zur Aufnahme der Scherflüssigkeit zwischen sich bilden, wobei der antreibende Primärteil (1) den Planetenräder (6) tragenden Steg (4, 5), der abtriebende Sekundärteil (2) das eine Abtriebsscheibe (8) tragende innere Sonnenrad und ein gegenüber Primär- und Sekundärteil drehbar gelagertes Tertiärteil das äußere Sonnenrad bildet und wobei die mit dem Steg (4) umlaufenden Planetenräder (6) über die Axialspalte (6/7, 6/8) sowohl mit dem inneren als auch mit dem äußeren Sonnenrad in Eingriff stehen und daß das Tertiärteil als abbremsbares Kupplungsgehäuse (3) ausgebildet und durch eine Trennwand (10) in eine Arbeits- und in eine Vorratskammer (9, 14) unterteilt ist, wobei zwischen Arbeits- und Vorratskammer eine steuerbare Fluidverbindung (11, 12) besteht, daß in der Arbeitskammer (9) die miteinander in Eingriff befindlichen Glieder (6, 7, 8) des Planetengetriebes angeordnet sind, und daß der abtriebende Sekundärteil als Welle (2) aus dem Kupplungsgehäuse (3) geführt ist.

2. Flüssigkeitsreibungskupplung nach Anspruch 1, dadurch gekennzeichnet, daß die Planetenräder als Doppelscheiben (6) mit einem Axialspalt, das innere Sonnenrad als einfache Scheibe (8) und das äußere Sonnenrad als einfache Ringscheibe (7) ausgebildet sind, wobei die Scheibe (8) und die Ringscheibe (7) in den Axialspalt der Doppelscheibe (6) eingreifen und zwei Axialspalte (6/7, 6/8) bilden.

3. Flüssigkeitsreibungskupplung nach Anspruch 1 oder 2, dadurch gekennzeichnet, daß der Primärteil (1) eine innere Vorratskammer (17) mit einem radial außen angeordneten, fliehkraftgesteuerten Ventil (19, 19') und mindestens einem radial innen angeordneten Staukörper (18) mit Überströmöffnung (18') aufweist, der ständig mit mindestens einem Planetenrad (6) zur Herstellung einer Zirkulation von Scherflüssigkeit durch die Vorratskammer (17) des Primärteiles (1) in Eingriff steht.

4. Flüssigkeitsreibungskupplung nach Anspruch 1, 2 oder 3, dadurch gekennzeichnet, daß die Fluidverbindung (11, 12) zwischen Arbeits- und Vorratskammer (9, 14) temperaturabhängig steuerbar ist.

5. Flüssigkeitsreibungskupplung nach Anspruch 4, dadurch gekennzeichnet, daß die Fluidverbindung (11, 12) zwischen Arbeits- und Vorratskammer (9, 14) über ein außen am Kupplungsgehäuse (3) angeordnetes Bimetall (15) steuerbar ist.

**Revendications**

1. Embrayage à cisaillement de liquide comportant une partie primaire menante (1) et une partie secondaire menée (2), sur laquelle est fixé un ventilateur (21), l'énergie entre la partie menante et la partie menée étant transmise par l'intermédiaire des forces de cisaillement d'un liquide de cisaillement qui est situé dans l'embrayage, caractérisé en ce que la partie primaire et la partie secondaire (1, 2) sont des composants d'une transmission planétaire à trois composants, les composants mutuellement en prise (6, 7, 8) formant entre eux des intervalles axiaux (6/7, 6/8) pour recevoir le liquide de cisaillement, la partie primaire menante (1) constituant le porte-satellites (4, 5) portant les roues satellites (6), la partie secondaire menée (2) constituant la roue solaire intérieure portant un disque mené (8) et une partie tertiaire montée de façon tournante par rapport à la partie primaire et à la partie secondaire formant la roue solaire extérieure tandis que les roues satellites (6), tournant avec le porte-satellites (4), sont en prise, par l'intermédiaire des intervalles axiaux (6/7, 6/8) aussi bien avec la roue solaire intérieure qu'avec la roue solaire extérieure et en ce que la partie tertiaire est agencée comme un carter d'embrayage (3) pouvant être freiné et est divisée par une paroi séparatrice (10) en une chambre de travail (9) et une chambre d'alimentation (14), une liaison fluidique (11, 12) pouvant être commandée étant établie entre la chambre de travail et la chambre d'alimentation, en ce que les composants mutuellement en prise (6, 7, 8) de la transmission planétaire sont disposés dans la chambre de travail (9) et en ce que la partie secondaire menée sort du carter d'embrayage (3) sous forme d'un arbre (2).

2. Embrayage à cisaillement de liquide selon la revendication 1, caractérisé en ce que les roues satellites sont agencées sous forme de doubles disques (6) avec entre eux un intervalle axial, la roue solaire intérieure est agencée comme un simple disque (8) et la roue solaire extérieure est agencée comme un simple disque annulaire (7), le disque (8) et le disque annulaire (7) s'engageant dans l'intervalle axial du double disque (6) et formant deux intervalles axiaux (6/7, 6/8).

3. Embrayage à cisaillement de liquide selon la revendication 1 ou 2, caractérisé en ce que la partie primaire (1) comporte une chambre intérieure d'alimentation (17) pourvue d'une soupape (19, 19') disposée radialement à l'extérieur et commandée par force centrifuge ainsi qu'au moins un corps de retenue (18), disposé radialement à l'intérieur, comportant un orifice de décharge (18') et qui est constamment en prise avec une roue satellite (6) pour l'établissement d'une circulation de liquide de cisaillement à travers la chambre d'alimentation (17) de la partie primaire (1).

4. Embrayage à cisaillement de liquide selon la revendication 1, 2 ou 3, caractérisé en ce que la liaison fluidique (11, 12) entre la chambre de travail (9) et la chambre d'alimentation (14) peut être commandée en fonction de la température.

5. Embrayage à cisaillement de liquide selon la revendication 4, caractérisé en ce que la liaison fluidique (11, 12) entre la chambre de travail (9) et la chambre d'alimentation (14) peut être commandée par l'intermédiaire d'un bimétal (15) disposé extérieurement sur le carter d'embrayage (3).

**Claims**

1. A fluid friction coupling comprising an input primary member (1) and an output secondary member (2) on which a fan (21) is fixed, wherein the power is transmitted between the input and the output by way of the shearing forces of a shearing fluid which is disposed in the coupling, characterised in that the primary and secondary members (1, 2) are members of a three-member planetary transmission, wherein the members (6, 7, 8) which are in engagement with each other form between them axial gaps (6/7, 6/8) for accommodating the shearing fluid, wherein the input primary member (1) forms the carrier (4, 5) carrying the planet wheels (6), the output secondary member (2) forms the inner sun wheel carrying the output disc (8), and a tertiary member which is mounted rotatably relative to the primary and secondary members forms the outer sun wheel, and wherein the planet wheels (6) which rotate with the carrier (4) are in engagement by way of the axial gaps (6/7, 6/8) both with the inner and with the outer sun wheels, and that the tertiary member is in the form of a coupling housing (3) which can be braked and which is divided by a partitioning wall (10) into a working and a storage chamber (9, 14), wherein there is a controllable fluid communication (11, 12) between the working and the storage chambers, that the members (6, 7, 8) of the planetary transmission which are disposed in engagement with each other are arranged in the working chamber (9) and that the output secondary member is passed in the form of a shaft (2) out of the coupling housing (3).

2. A fluid friction coupling according to claim 1 characterised in that the planet wheels are in the form of double discs (6) with an axial gap, the inner sun wheel is in the form of a single disc (8) and the outer sun wheel is in the form of a single annular disc (7), wherein the disc (8) and the annular disc (7) engage into the axial gap in the double disc (7) and form two axial gaps (6/7, 6/8).

3. A fluid friction coupling according to claim 1 or claim 2 characterised in that the primary member has an inner storage chamber (17) with a radially outwardly disposed valve (19, 19') which is controlled by centrifugal force and at least one radially inwardly disposed dam member (18) with flow transfer opening (18'), which dam member is constantly in engagement with at least one planet wheel (6) to produce a circulation of shearing fluid through the storage chamber (17) of the primary member (1).

4. A fluid friction coupling according to claim 1, claim 2 or claim 3 characterised in that the fluid communication (11, 12) between the working and storage chambers (9, 14) is controllable in dependence on temperature.

5. A fluid friction coupling according to claim 4 characterised in that the fluid communication (11, 12) between the working and the storage chambers (9, 14) is controllable by way of a bimetal member (15) arranged externally on the coupling housing (3).

$$n_2 = n_1 \left(1 + \frac{R_a}{R_i}\right)$$

FIG.1

FIG.3

FIG.2